# EUROPÄISCHE PATENTSCHRIFT

(11) **EP 0 969 755 B1**
(45) Veröffentlichungstag und Bekanntmachung des Hinweises auf die Patenterteilung: **13.11.2002**
(21) Anmeldenummer: 97906070.4
(22) Anmeldetag: 13.03.1997
(51) Int. Cl.: A47J 31/40

(54) **KAFFEEAUTOMAT**
AUTOMATIC COFFEE MAKER
DISTRIBUTEUR AUTOMATIQUE DE CAFE

(43) Veröffentlichungstag der Anmeldung: 12.01.2000
(73) Patentinhaber: EGRO AG, CH-5443 Niederrohrdorf (CH)
(72) Erfinder: KARG, Anton, CH-5406 Rütihof (CH); PUDDU, Raffaele, CH-5443 Niederrohrdorf (CH); MERKER, Fritz, CH-5406 Rütihof (CH)
(74) Vertreter: Frauenknecht, Alois J.
(86) Internationale Anmeldenummer: CH9700105
(87) Internationale Veröffentlichungsnummer: WO98039998

(56) Entgegenhaltungen:
- EP-A- 0 154 206
- EP-A- 0 380 450
- EP-A- 0 407 365
- EP-A- 0 486 433
- EP-A- 0 658 330
- FR-A- 2 663 216

## Beschreibung

Die Erfindung bezieht sich auf eine Kaffeemaschine gemäss dem Oberbegriff des Anspruchs 1 sowie auf ein Verfahren zum Betrieb der Kaffeemaschine.

Kaffeemaschinen, auch Kaffeeautomaten genannt, sind insbesondere im Gastgewerbe im Einsatz. Diese Maschinen sind in der Regel grossvolumige Gebilde, versperren im Ausschankbereich unverhältnismässig viel Platz und passen in keiner Weise in modern und ansprechend gestaltete Gasträume. Zudem erfordern diese Maschinen einen relativ hohen Wartungsaufwand und verursachen bei Störungen längere Betriebsunterbrüche. Im weiteren sind deren mechanische Bauelemente konstruktionsbedingt oft mit Kaffeepulver und/oder auslautendem Wasser und Kaffee verunreinigt.

Deshalb wurde eine Kaffeemaschine (EP -A1- 154 206) geschaffen, mit einer leicht zur Reinigung aus- und einbaubaren Brühgruppe. Sämtliche Antriebs- und Versorgungselemente sind im Gehäuse dieser Maschine untergebracht und über kuppel- und ausrückbare Verbindungsglieder mit der als Einschubmodul ausgestalteten Brühgruppe wirkverbindbar. Bei der Kaffeezubereitung wird die einzige Brühkammer in einer ersten Stellung mit Kaffeepulver befüllt und in einer anschliessenden durch einen zentralen Kurbelantrieb in eine zweite Stellung geschwenkt, um dort in ein Verschlussorgan einzufahren, wo der Brühvorgang mit erhitztem und unter Druck stehenden Wasser erfolgt. Nach dem Auslaufen der nur einen Kaffeeportion, fährt die Brühkammer, wieder durch den Kurbelantrieb bewegt, aus dem Verschlussorgan aus, wodurch der entstandene Pulverkuchen ausgestossen wird; darauf schwenkt sie wieder in die erste Stellung zurück und ist erneut befüllbar.

Nachteilig bei dieser Konstruktion ist die durch den zentralen Kurbelantrieb bedingte Bauform der Kaffeemaschine, was relativ lange Kurbel- und Führungsgestänge mit reibungsintensiven seitlichen Führungen erfordert und nur eine geringe Drehgeschwindigkeit erlaubt. Zudem verursacht das Ausstossen des Pulverkuchens am Ort des Brühvorganges zu Verschmutzungen, so dass eine gründliche Reinigung der Maschine in kurzen Intervallen nötig ist.

Die EP -A2- 380 450, gemäss dem Oberbegriff des Anspruchs 1 der vorliegenden Erfindung, beschreibt eine Kaffeemaschine mit einem Bohnenbehälter für zwei Kaffeesorten zur wahlweisen und getrennten Zuführung der Kaffeebohnen zu einem gemeinsamen Mahlwerk. Ein rotorartiger Brühblock mit einer seitlich angeordneten Schwinge wird in einer senkrechten Füll-Position mit Kaffeepulver beschickt und anschliessend in eine zweite Brüh-Position und schliesslich in eine dritte Kaffeeziegel-Ausstoss-Position in die gleiche Richtung verdreht. Der gesamte Drehwinkel entspricht dabei fast 360°. Über eine Steuerkurve wird ein axial wirkender Brühkolben mitbewegt. Die vorerwähnte Schwinge dient der Arretierung des Brühkopfs in seiner Brühstellung. Durch den Einbau einer Feder zwischen dem Brühkolben und seinem Stössel entsteht eine Brühkammer, welche sich in einem geringen Masse der jeweiligen, variierenden Pulvermenge anzupassen vermag.

Nachteilig sind die grossen erforderlichen Schwenkwege der Brühkammer und deren notwendige Verriegelung und Entriegelung in der Brühstellung mittels der Schwinge, was aus kinematischen Gründen die mögliche Ausschankleistung reduziert. Zudem ist die Bauhöhe der Kaffeemaschine durch die rotierende Brühkammer relativ hoch; optisch ansprechende Durchbrüche in der Maschine sind nicht möglich. Die federnd ausgestaltete Brühkammer führt zu unterschiedlichen mechanischen Pressungen des Pulvers, was die reproduzierbare Kaffeequalität beeinträchtigt.

Eine weitere Brühvorrichtung ist aus der EP -A1- 486 433, mit ebenfalls variablem Brühzylindervolumen bekannt, wobei hierfür eine im Brühzylinder vorhandene Siebplatte in ihrer Höhenlage, über einen Seilzug, verstellbar ist. Das Verschwenken der Brühkammer erfolgt, über Hebel und in seitlichen Nuten geführt, durch einen Spindelantrieb.

Eine gedrängtere Anordnung ist in der EP -A1- 407 365 dargestellt, wobei ein Getriebemotor mit Nockenscheiben den Antrieb der Brühkammer, zur Erzeugung einer ebenfalls einzigen Portion Kaffee übernimmt.

Nach den beiden zuletzt genannten Publikationen arbeitende Kaffeemaschinen weisen hohe Reibungsverluste auf, so dass eine hohe Ausschankleistung ebenfalls nicht erzielbar ist.

Es ist daher Aufgabe der vorliegenden Erfindung eine Kaffeemaschine zu schaffen, deren Bauhöhe gegenüber dem Bekannten geringer und/oder deren Front optisch durchbrochen ist. Die Maschine soll somit ästhetisch ansprechend wirken und im Betrieb und im Unterhalt servicefreundlich sein. Im weiteren ist die Konstruktion derart auszulegen, dass sie frei ist von unhygienischen Stauräumen für Kaffeepulver und Kaffee, wobei durch eine geeignete Medienführung Verschmutzungen erst gar nicht entstehen sollen.

Die Kaffeemaschine soll ausserdem den gleichzeitigen Ausschank von zwei und mehr Tassen erlauben.

Erfindungsgemäss ist diese Aufgabe nach den Merkmalen des Anspruchs 1 gelöst.

Die im Anspruch 1 charakterisierte Kaffeemaschine weist den Vorteil einer zweckmässig auf einer Kreisbahn ausgestalteten kompakten Vorrichtung auf, welche trotz ihrer geringen notwendigen Bauhöhe definierte Arbeitsstellungen aufweist und die kinetisch günstig ist. Die gewählten, bevorzugten Winkelsteilungen sind an sich von einer beliebigen Anordnung der Ausgangsstellung ausgehend, ausführbar. Die Maschine ist für hohe Ausschankleistungen geeignet, insbesondere für den Dauerbetrieb im Gastgewerbe. Beim gleichzeitigen Ausschank von zwei Tassen vergrössert sich die Taktzeit nicht, da hierfür die grössere Brühkammer zum Einsatz gelangt. Ebenfalls können simultan in beiden Brühkammern Brühvorgänge erfolgen, was die Leistung nochmals erhöht.

Der in Patentanspruch verwendete Begriff der mittelbaren Betätigung der Kolben, schliesst Lösungen ein, bei denen die Bewegung des Brühblocks lediglich als Referenz für die Auslösung der Kolbenhube dient.

Bevorzugt sind Ausführungen in denen der Medienfluss von oben nach unten erfolgt; in analoger Weise lassen sich aber auch die Medien in anderer, an sich beliebiger Weise führen, wenn dies, beispielsweise durch andere Schankeinrichtungen, verlangt wird.

In nachfolgenden abhängigen Ansprüchen sind vorteilhafte Weiterbildungen bzw. Betriebsverfahren aufgeführt.

Die Anordnung nach Anspruch 2 lässt sich sehr wirtschaftlich realisieren und ist im Betrieb sauber und hygienisch.

Die Flansche nach Anspruch 3 erlauben einen sehr einfachen mechanischen Antrieb der Brühgruppe.

Der Einbezug von Stirnrädern und Kurvenscheiben gemäss Anspruch 4 benötigt nur einen zentralen, ausserhalb der Brühgruppe anbringbaren, handelsüblichen Antrieb mittels Getriebemotor.

Alternativ hierzu können individuelle Antriebsmittel eingesetzt werden, vgl. Anspruch 5.

Die Zuordnung der Mahlwerke gemäss Anspruch 6 reduziert die nötige Bauhöhe der Maschine nochmals beträchtlich.

Der Einbezug eines Schwenktrichters nach Anspruch 7 lässt eine einfache Realisation von parallel angeordneten Brültkammern zu, insbesondere von solchen mit verschieden grossen Durchmessern und Volumina. Dies erlaubt den gleichzeitigen Ausschank von mehreren Tassen Kaffee welche die gleiche Qualität wie eine Einzeltasse aufweisen.

Besonders bewährt hat sich das Verfahren zum Betrieb der Kaffeemaschine nach Anspruch 8, wobei dessen günstige Kinematik einen wirtschaftlichen Betrieb der Maschine gewährleistet.

Nachfolgend werden anhand von Zeichnungen Ausführungsbeispiele des Erfindungsgegenstands dargestellt.

Es zeigen:
- Fig. 1: eine vereinfachte, Perspektiv-Darstellung eines Kaffeeautomaten,
- Fig. 2: eine Prinzipdarstellung der Elemente der Brühgruppe nach Fig. 1,
- Fig. 3: den Kaffeeautomaten Fig. 1 in einer Teilschnitt-Darstellung von vorne,
- Fig. 4: den Kaffeeautomaten Fig. 1 in einer Teilschnitt-Darstellung von der Seite betrachtet,
- Fig. 5: einen Sieb-/Ausstoss-Kolben nach Fig. 3, Fig. 4 in vergrösserter Darstellung,
- Fig. 6: ein Strukturbild des Bewegungsablaufes in der Brühgruppe des Kaffeeautomaten nach Fig. 1,
- Fig. 7: die Kinematik des Bewegungsablaufes gemäss Fig. 6, mit Fig. 7a der Bewegung des Brühkopfes, der Drehung des Brühblocks, der Hubbewegung der Sieb-/Ausstosskolben im Brühblock und mit Fig. 7b den Steuer- und Schaltfunktionen im zeitlichen Ablauf der Bewegungen und
- Fig. 8: eine bevorzugte Variante zur Realisierung der Bewegungsabläufe nach Fig. 7 mittels Kurvenscheiben und Mitnehmern, wobei Fig. 8a und Fig. 8b je eine Seite eines Stirnrades darstellen.

In sämtlichen Figuren sind gleiche Teile mit gleichen Bezugsziffern versehen.

In einem mit 100 bezeichneten Apparategehäuse befindet sich ein Kaffeeautomat mit einer Brühgruppe 1 mit Pulveraufbereitung.

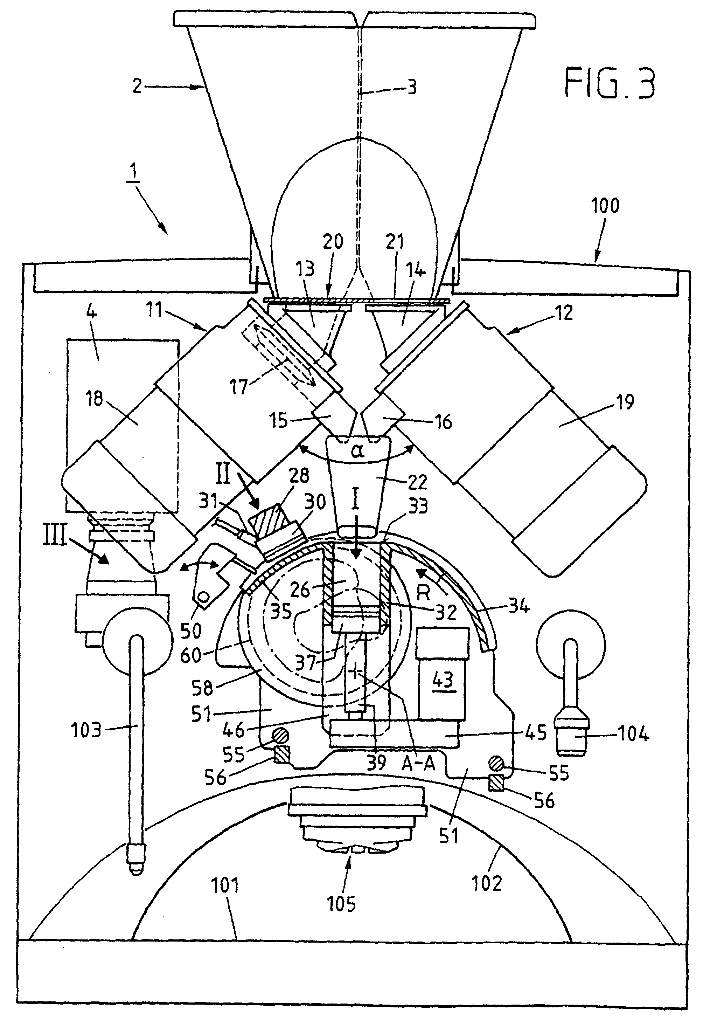

In einen Bohnenbehälter 2 werden in notorisch bekannter Weise Kaffeebohnen eingefüllt, wobei dieser Behälter 2 eine Trennwand 3 aufweist, was die Verwendung von zwei verschiedenen Kaffeesorten zulässt; vgl. Fig. 3.

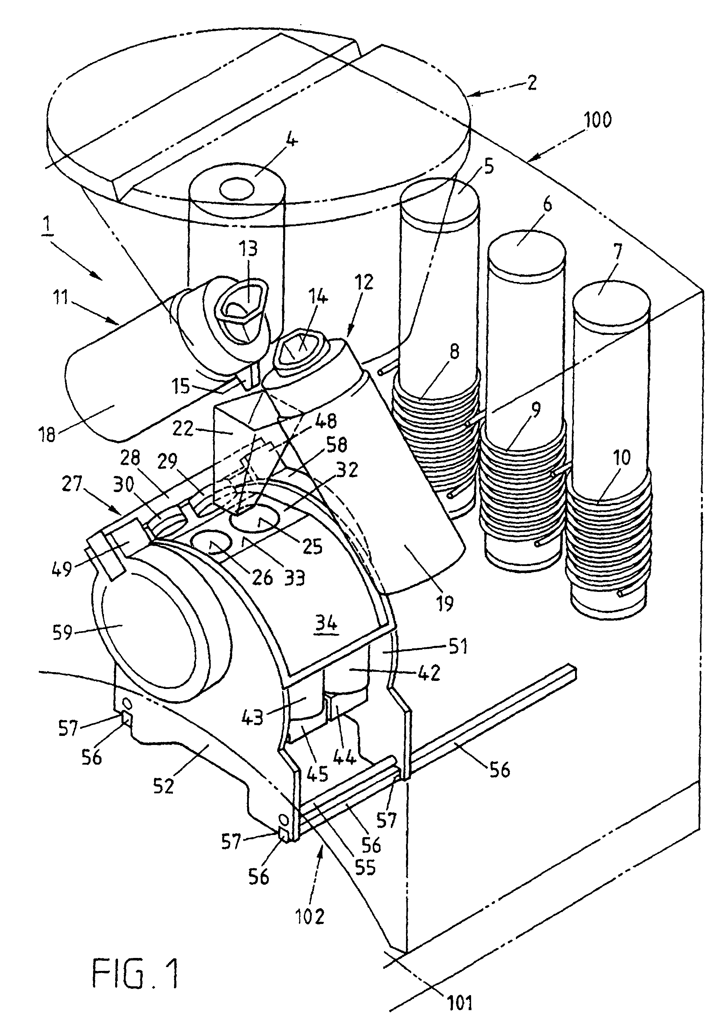

Im oberen Bereich des Apparategehäuses 100 ist eine an sich bekannte Wasserpumpe 4 angeordnet, welche Boiler 5,6,7 speist, die ihrerseits durch Heizspiralen 8,9,10 umwickelt sind. In einem Winkel von 90° zueinander sind Kaffeemühlen 11 und 12, mit Schütt-Trichtern 13,14, Pulver-Auswürfen und Elektromotoren 18,19 angeordnet. - Sichtbar ist in Fig. 1 nur der Pulver-Auswurf 15. Zwischen den Kaffeemühlen 11,12 befindet sich ein steuerbarer Schwenktrichter 22, der frisch gemahlenes Kaffeepulver in darunterliegende Brühkammern 25 oder 26 wahlweise zuführt.

In einem sogenannten Brühkopf 27 befindet sich ein Brüh-Joch 28, an welchem je ein grosser und ein kleiner Brühkolben 29, bzw. 30 befestigt sind. In Einfüllstellung gezeichnet ist der Brühblock 32 mit einer ebenen Fläche 33, in welchem die vorerwähnten Brühkammern 25,26 aufgenommen sind.

Ferner ist eine Seitenabdeckung 34 ersichtlich, unter welcher sich nachfolgend beschriebene Spindelantriebe 42 und 43 mit ihren Getriebegehäusen 44 bzw. 45 befinden.

Gelagert ist das Ganze in flächigen Gehäuseträgern 51,52, die durch verschraubte Distanzhalter 55 gehalten sind. In Fig. 1 ist die Brühgruppe auf zwei Führungsschienen 56 gelagert, in herausgezogenem Zustand zu sehen. Die Führungsschienen 56 passen formschlüssig in zueinander korrespondierende Ausnehmungen 57 in den Gehäuseträgern 51,52.

Ferner sind Kurvenscheibengehäuse 58,59 ersichtlich, welche mit einer oben liegenden Jochführung 49 versehen sind.

Das Apparategehäuse 100, strichpunktiert, ist in seinem unteren Bereich mit einer angedeuteten Fussplatte 101 mit Tassenauflage versehen; zwischen der Fussplatte und dem eigentlichen Apparategehäuse 100 befindet sich eine bogenförmige Aussparung 102.

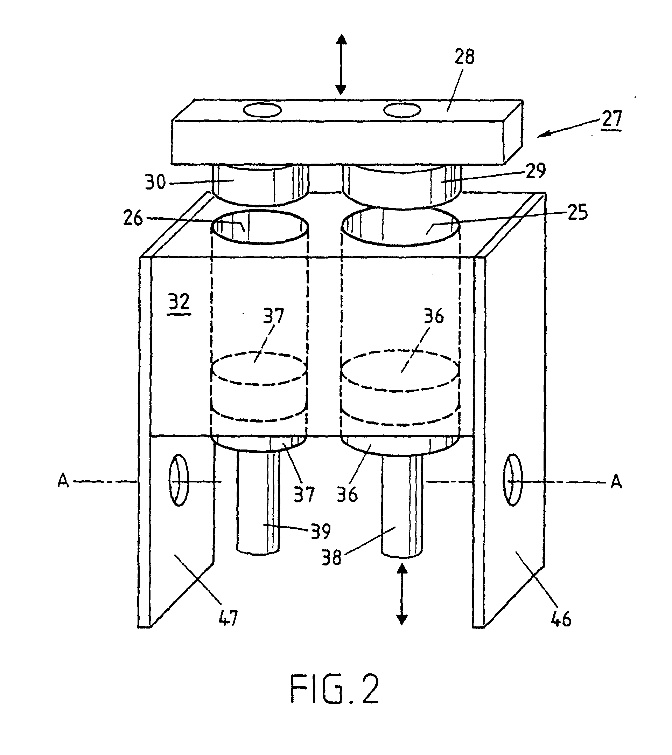

Die Prinzipdarstellung Fig. 2 dient dem besseren Verständnis der Detailzeichnungen.

Ersichtlich ist der in Pfeilrichtung heb- und absenkbare Brühkopf 27 mit seinem Joch 28 und den darunter angeordneten Brühkolben 29 und 30. Im Brühblock 32 sind axial verschiebbare Sieb-/Ausstoss-Kolben 36 und 37 in den Brühkammern 25 und 26 eingeschoben, wobei je eine Kolbenstange 38 bzw. 39 ein Innengewinde aufweist. Am Brühblock 32 sind seitlich Flansche 46,47 angeordnet, die dessen Verschwenken um eine Achse A--A dienen.

Die Teilschnittdarstellung Fig. 3 zeigt wiederum das Apparategehäuse 100 mit seiner Brühgruppe 1 und seiner Vorrichtung zur Aufbereitung und Zuteilung von Kaffeepulver.

Zusätzlich sind hier ein Mahlwerk 17 und ein zweiter Pulver-Auswurf 16, der Winkel α zwischen den Elektromotoren 18,19, sowie die Verschwenkstellungen I-III des Brühblocks 32, eingezeichnet.

Die erste Füll-Position ist mit I bezeichnet und entspricht der dargestellten Lage in Fig. 3. In einem Winkel um 30°, in Gegenuhrzeigerrichtung, befindet sich die zweite sogenannte Brüh-Position II, während die Kaffeeziegel-Ausstoss-Position III, gegenüber der Ausgangsposition (Füll-Position I) um 60° im Gegenuhrzeigersinn auf der Kreisbahn R verdreht ist.

Ebenfalls zu sehen ist ein Heisswasser-Zulauf 31, der über nicht dargestellte Ventile, mit den Boilern 5,6,7, Fig. 1, verbunden ist und im Brühkolben 30 mündet.

Ersichtlich ist, dass der Brühblock 32 mit seinen Seitenabdeckungen 34 und 35 einstückig ausgeführt ist.

Neben dem Brüh-Joch 28 ist ein in Pfeilrichtung schwenkbarer Abstreifer 50 angeordnet. Dieser wird durch die Drehbewegung des Brühkopfes 27 betätigt, wofür auf der Abdeckung 35 ein - aus Übersichtlichkeitsgründen nicht eingezeichneter - Betätigungsnocken vorgesehen ist, der die Drehbewegung des durch eine Feder gespannten Abstreifers 50, im Uhrzeigersinn bewirkt, bzw. diesen kippt, siehe Pfeile um Drehachse.

Im linken Teil des Apparategehäuses 100 befindet sich, in bekannter Weise angeordnet, eine herausnehmbare Schublade (nicht dargestellt) für den Kaffepulversatz.

Seitlich neben der Brühgruppe sind je ein Heisswasser-Auslass 103 und ein Dampf-Auslass 104 vorgesehen, welche notorisch bekannt sind.

Die Beschickung der Kaffeemühlen 11 und 12 erfolgt über eine Absperrscheibe 20 mit zwei Bohnen-Durchlässen 21.

Der Bohnenbehälter 2 lässt sich auch in gefülltem Zustand von der Maschine abnehmen und transportieren; die Absperrscheibe 20 wird hierfür verdreht, sodass die Bohnen-Durchlässe 21 verschlossen sind.

Im Zentrum der bogenförmigen Aussparung 102, welche einen Durchblick durch den Kaffeeautomaten erlaubt, sind höhenverstellbare Kaffeeauslässe 105 vorhanden.

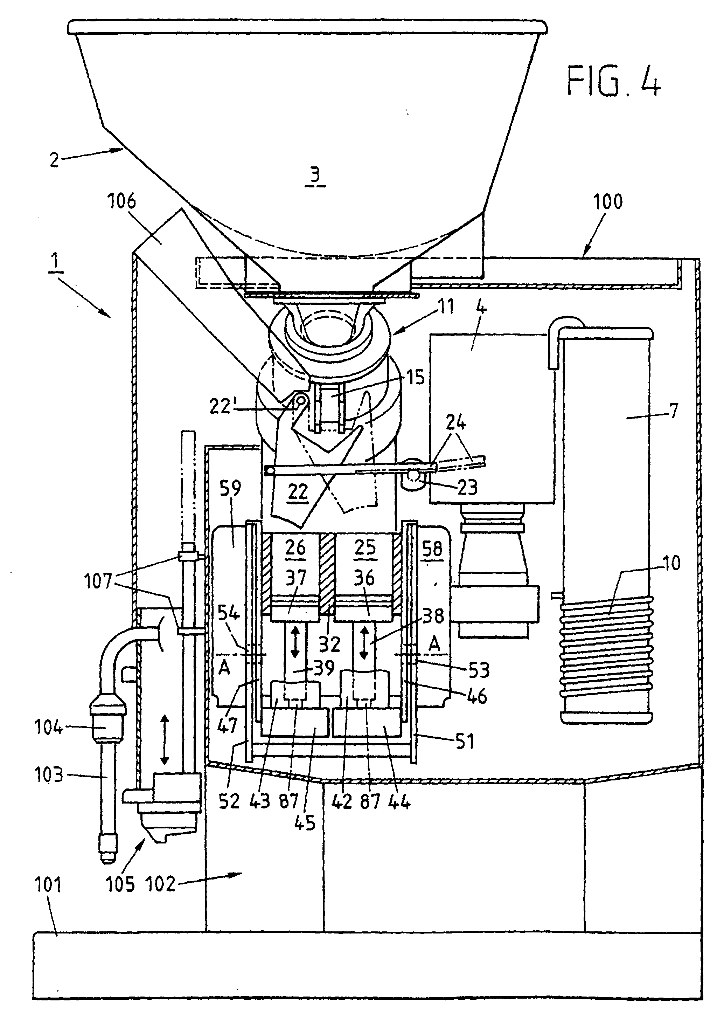

Von der Seite betrachtet zeigt die Teilschnitt-Darstellung Fig. 4 weitere Einzelheiten. Beispielsweise ist die Höhenverstellbarkeit der Kaffeeauslässe 105 durch Führungen 107 ersichtlich.

Ebenfalls kann die konstruktive Zuordnung der Flansche 46 und 47 mit ihren Achslagern 53,54 zum Brühblock 32 erkannt werden. Ferner sieht man die unterschiedlichen Durchmesser der Brühkammern 25 und 26, wobei die grössere Brühkammer 25 der gleichzeitigen Zubereitung von zwei Tassen Kaffee dient. Die notwendige wahlweise Zuteilung des Kaffeepulvers in die Brühkammern 25,26 erfolgt durch den steuerbaren Schwenktrichter 22, der mittels eines Schwenkantriebs 23 und einer Zahnstange 24 den Trichter 22 um eine Schwenkachse 22' dreht.

Der Schwenkantrieb 23 weist einen handelsüblichen Elektromotor mit Ritzel auf.

Die notwendige Drehung der in Fig. 4 ersichtlichen Gewindespindeln 87 zur axialen Kolbenbewegung, erfolgt über die beiden Getriebegehäuse 44 und 45.

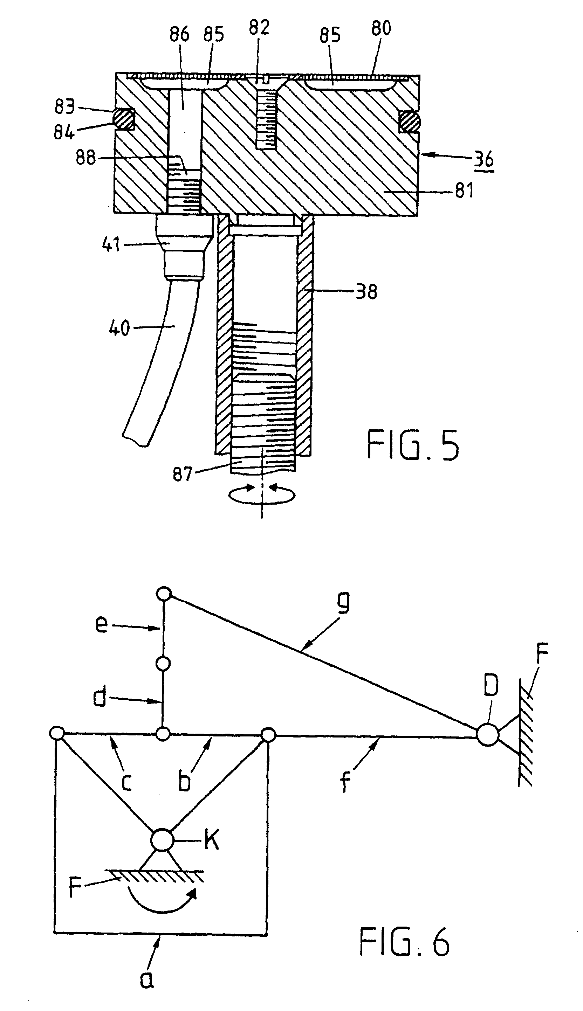

Der in Fig. 5 repräsentativ dargestellte Sieb-/Ausstoss-Kolben 36 besitzt stirnseitig eine Siebplatte 80, welche als ebenfalls notorisch bekanntes Brühsieb dient. Dieses ist in einem Kolbenkörper 81 durch eine Zentralverschraubung 82 fixiert. Peripher im Kolbenkörper 81 befindet sich eine Ringnut 83, in welcher eine Ringdichtung 84 - ein Neoprene (Trademark) 0-Ring - eingefügt ist. Unterhalb der Siebplatte 80 ist eine ringförmige Ausnehmung 85 zu sehen, welche in einer Auslass-Bohrung 86 mit einem Innengewinde 88 mündet, in dem eine Schlauch-Kupplung 41 mit einem, dem Kaffeeauslauf dienenden Schlauch 40, angeschlossen ist.

Am Kolbenkörper 81 greift zentral eine Kolbenstange 38 mit Innengewinde an; sie wird durch die zu Fig. 4 erwähnte Gewindespindel 87 angetrieben.

Die Kinematik der Bewegungsabläufe lässt sich anhand des Strukturbilds Fig. 6 analysieren. Die für einen zentralen mechanischen Antrieb nötigen Kurven sind durch eine einzige Kurvenscheibe K symbolisiert; ebenso der Antrieb D.

Gemäss Fig. 6 erfolgt zuerst eine Drehbewegung a der Kurvenscheibe, dann eine erste Bewegung b des Brühblocks um 30°, eine zweite Bewegung c um 30°, eine Kolbenbewegung d nach oben über einen ersten Abschnitt, eine Kolbenbewegung e nach oben über einen zweiten Abschnitt; ferner ist ein Antrieb f der Kurvenscheibe K und sind Antriebe g der Kolben erforderlich.

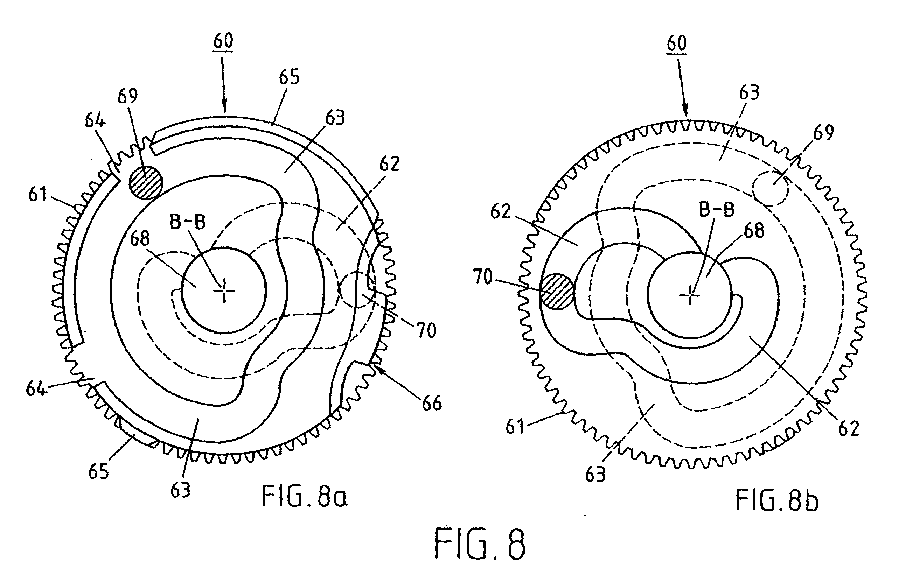

Die praktische Umsetzung der Kurvenscheibe K ist nachstehend in Fig. 8 dargestellt.

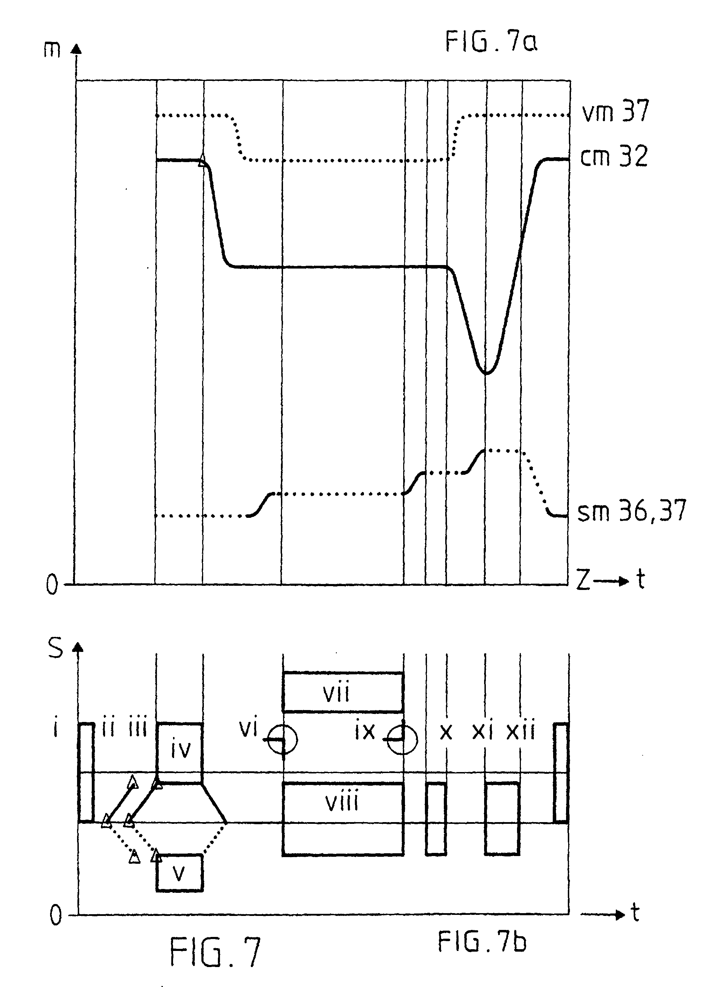

Die tatsächlichen Bewegungsabläufe in Funktion der Zeit t sind der Fig. 7 zu entnehmen, wobei die nachfolgend aufgeführten Bewegungen m und Funktionen S feststellbar sind. Dabei entspricht die Zeit t von 0 bis Z einem gesamten Arbeitszyklus.

Nach Fig. 7a:
vm37 Bewegung m des Brühkopfs (vertical motion)
cm32 Bewegung m des Brühblocks (circular motion)
sm36,37 Hubbewegung der Sieb-/Ausstoss-Kolben (stroke motion)

Nach Fig. 7b sind folgende sequentiellen Steuer- und Schaltfunktionen S den Bewegungsabläufen nach Fig. 7a zugeordnet:
i Initialisierung elektronisch, Position und Heisswasser
ii Wahl des Pulver-Kanals, kleine oder grosse Menge, (grosse Menge dargestellt)
iii Wahl der zugeordneten Mühle
iv Mahlzeit - bestimmt Kaffeemenge
v zum Weg der kleinen Menge, kurze Mahlzeit
vi Brühventil vom Boiler zur Brühkammer
vii Förderzeit der Wasserpumpe, Mengenzählung mit Flowmeter
viii Brühvorgang in Brühkammer mit Kaffeeausgabe
ix Brühventil auf Ablauf gestellt
x Hubbewegung verdrängt Restwasser in Ablauf (Nachpressen)
xi Kaffeesatz wird ausgestossen und abgestreift
xii Zurückdrehen in die Ausgangslage, Endschalter kontrollieren

Die einfachste Umsetzung der Kinematik in eine mechanische Steuerung erfolgt gemäss Fig. 8 durch zwei, auf den Achsen A--A einander gegenüberliegende Kurvenscheiben, welche Stirnrädern 60 mit Verzahnungen 61 zugeordnet sind.

Peripher befinden sich Ausnehmungen 64, die dem Ein- und Ausfahren eines Mitnehmers 69, der Bestandteil des vorgängig beschriebenen Brühkopfs 27 ist, dienen. Die Kurvenscheiben sind durch Kurvennuten 62 und 63 realisiert, so dass die Mitnehmer-Zapfen 69 und 70 beidseitig geführt werden.

In Fig. 8a ist dementsprechend die äussere Kurvennut 63 in Ansicht zu sehen, während in Fig. 8b die innere Kurvennut 62 des Stirnrades 60 als ausgezogene Linie erscheint. Zusätzlich sind auf der inneren Seite des Stirnrades 60, Fig. 8a, Schaltstege 66 ersichtlich, welche nicht dargestellte Mikroschalter initiieren.

Eine zentrale Lagerbohrung 68 erlaubt die Drehung des Stirnrades 60 um die Achse B--B.

Die Konstruktion der Stirnräder 60 ist derart ausgelegt, dass identische Teile auf beiden Seiten der Brühgruppe, in den Kurvenscheibengehäusen 58 und 59 zur Anwendung gelangen. Vgl. Fig. 4.

Die Umsetzung des vorstehend beschriebenen bevorzugten Ausführungsbeispiels erfolgt mittels handelsüblicher Komponenten und Techniken, insbesondere auch der Antriebs- und Steuermittel. So wurde beispielsweise für den Antrieb der Stirnräder ein vom Automobilbau bekannter Scheibenwischerantrieb mittels Schneckengetriebe und 24V Gleichstrommotor verwendet. Ebenfalls finden die übrigen elektromotorischen Antriebe, mit Ausnahme der Kaffeemühlen, im Fahrzeugbau ihre bekannte Verwendung. Die Steuerung des zeitlichen Verfahrenslaufs erfolgt mit ebenfalls üblichen Mikroprozessoren und Steuer-und Schaltelementen.

Ein erfindungsgemäss realisierter Kaffeeautomat ist in der Lage, mit einer Boilerleistung von 3kW pro Stunde 200 Tassen schmakhaften Kaffees zuzubereiten. Noch höhere Ausschankleistungen sind möglich, wenn grössere Anschlussleistungen zur Verfügung stehen und entsprechende Vorkehrungen zum Abtransport des Kaffeesatzes vorgenommen werden.

Die ganze Brühgruppe 1 lässt sich auf den Führungsschienen 56, vgl. Fig 1, aus dem Kaffeeautomaten herausziehen und ist daher äusserst servicefreundlich. Im herausgezogenen Zustand sind auch die übrigen Bauteile und Einheiten der Maschine leicht zugänglich, so dass eventuelle Reperaturund Stillstandszeiten minimalisierbar sind.

Eine nochmalige Verringerung der Bauhöhe der ganzen Brühgruppe ist möglich durch spezielle Schrittmotoren und anderen, in Verbindung mit elektronischen Servo-Steuerungen benutzten Antrieben, so dass die Funktion der Kurvenscheiben de facto durch eine Software-Lösung realisierbar ist.

Die im Ausführungsbeispiel mittels handelsüblicher Mikroschaltern ausgelösten Funktionen lassen sich selbstverständlich auch kontaktlos realisieren, was insbesondere bei einer Software-Lösung technische Vorteile ergibt.

Die vorgängig beschriebene Weiterbildung und technische Weiterentwicklung des Erfindungsgegenstands lässt sich durch den Fachmann ohne zusätzliche erfinderische Tätigkeit umsetzen; sie ist vorwiegend eine Frage des finanziellen Aufwands und damit der zu produzierenden Stückzahlen.

Eine bevorzugte Ausführung einer Kaffeemühle, welche besonders platzsparend in den vorgängig beschriebenen Kaffeeautomaten eingebaut werden kann ist in der parallel Patentanmeldung PCT/CH9700106 näher beschrieben. Selbstverständlich können auch vorbekannte Kaffeemmühlen eingesetzt werden.

### Bezeichnungsliste

- 1: Brühgruppe mit Pulveraufbereitung
- 2: Bohnenbehälter
- 3: Trennwand (2 Sorten)
- 4: Wasserpumpe (kaltseitig)
- 5,6,7: Boiler
- 8,9,10: Heizspiralen (Wicklung)
- 11,12: Kaffee-Mühlen
- 13,14: Schütt-Trichter
- 15,16: Pulver-Anschlüsse
- 17: Mahlwerke
- 18,19: Elektromotoren
- 20: Absperrscheibe
- 21: Bohnen-Durchlass
- 22: Schwenktrichter (steuerbar)
- 22': Schwenkachse
- 23: Schwenkantrieb (Elektromotor mit Ritzel)
- 24: Zahnstange
- 25: grosse Brühkammer
- 26: kleine Brühkammer
- 27: Brühkopf
- 28: Brüh-Joch
- 29: grosser Brühkolben
- 30: kleiner Brühkolben
- 31: Heisswasser-Zulauf
- 32: Brühblock
- 33: ebene Fläche
- 34,35: Seitenabdeckungen
- 36: grosser Sieb-/Ausstoss-Kolben
- 37: kleiner Sieb-/Ausstoss-Kolben
- 38,39: Kolbenstange mit Innengewinde
- 40: Ausfluss-Schlauch
- 41: Schlauch-Kupplung
- 42,43: Spindelantrieb (Getriebe-Motoren)
- 44,45: Getriebegehäuse
- 46,47: Flansche
- 48,49: Jochführung (Schlitz-Führung)
- 50: Abstreifer mit Gummilippe
- 51,52: Gehäuseträger
- 53,54: Achslager (A--A)
- 55: Distanzhalter (verschraubt)
- 56: Führungsschienen
- 57: Ausnehmungen für 56
- 58,59: Kurvenscheibengehäuse
- 60: Stirnräder; Kurvenscheiben mit Aussenverzahnungen
- 61: Verzahnung
- 62: Kurvennut innen (Kurvenscheibe)
- 63: Kurvennut aussen (Kurvenscheibe)
- 64: Ausnehmungen
- 65: Nocken
- 66: Schaltstege
- 67: innere Ausnehmung
- 68: Bohrung für Achse (B--B)
- 69,70: Mitnehmer-Zapfen

- 80: Siebplatten (Brühsieb)
- 81: Kolbenkörper
- 82: Zentralverschraubung
- 83: Ringnut
- 84: Ringdichtung (0-Ring)
- 85: ringförmige Ausnehmung
- 86: Auslass-Bohrung
- 87: Gewindespindel
- 88: Innengewinde

- 100: Apparategehäuse
- 101: Fussplatte mit Tassenauflage
- 102: bogenförmige Aussparung
- 103: Heisswasser-Auslass
- 104: Dampf-Auslass
- 105: Kaffeeauslässe (höhenverstellbar)
- 106: Pulver-Schütte
- 107: Führungen für Kaffeeauslässe

- α: Winkel zwischen 18 und 19

- A--A: Schwenk-Achse von 32
- B--B: Dreh-Achse von 60
- K: Kurvenscheibe (Strukturbezeichnung)
- D: Antrieb (Strukturbezeichnung)
- F: Lagerungen
- R: Kreisbahn
- S: Funktionen (Steuer- und Schaltfunktionen)
- Z: Zyklusdauer (0 bis Z)

- a: Drehbewegung Kurvenscheibe
- b: 1. Bewegung um 30°
- c: 2. Bewegung um 30°
- d: Kolbenbewegung nach oben (1. Abschnitt)
- e: Kolbenbewegung nach oben (2. Abschnitt)
- f: Antrieb Kurvenscheibe
- g: Antrieb Kolben
- t: Zeit (Zeitachse)

- i: Initialisierung elektronisch, Position und Heisswasser
- ii: Wahl des Kanals, kleine oder grosse Menge, grosse gezeigt
- iii: Wahl der zugeordneten Mühle
- iv: Mahlzeit - bestimmt Kaffeemenge
- v: zum Weg der kleinen Menge, kurze Mahlzeit
- vi: Brühventil vom Boiler zur Brühkammer
- vii: Förderzeit der Wasserpumpe, Mengenzählung mit Flowmeter
- viii: Brühvorgang in Brühkammer mit Kaffeeausgabe
- ix: Brühventil auf Ablauf gestellt
- x: Hubbewegung verdrängt Restwasser in Ablauf (Nachpressen)
- xi: Kaffeesatz wird ausgestossen und abgestreift
- xii: Zurückdrehen in die Ausgangslage, Endschalter kontrollieren
- vm37: Bewegung des Brühkopfs (vertical motion)
- cm32: Bewegung des Brühblocks (circular motion)
- sm36,37: Hubbewegung der Sieb-/Ausstoss-Kolben (stroke motion)

## Patentansprüche

1. Kaffeemaschine mit wenigstens einer zylindrischen Brühkammer (26) und einer Vorrichtung zur Aufbereitung (2:17) und Zuteilung (15,16) von Kaffeepulver, welche Brühkammer (26) durch je einen oberen (30) und einen unteren (37), axial verschiebaren Kolben verschliessbar und in die heisses Wasser unter Druck einleitbar ist, wobei die Brühkammer (25) in einem Brühblock (32) eingelassen ist, welcher um eine horizontal angeordnete Achse (A--A) partiell auf einer Kreisbahn (R) geführt, in eine, vertikale, erste Füll-Position (I), anschliessend in eine zweite Brüh-Position (II) mit Heisswasser-Zuführung und Kaffee-Auslass und in eine dritte Kaffeeziegel-Ausstoss-Position (III) verschwenkbar ist und wobei dieser Brühblock (32) mittelbar oder unmittelbar einen oder mehrere gleichartige Kolben (30;37), axial wirkbar, mitbewegt , **dadurch gekennzeichnet, dass** der Brühblock (32) von seiner Ausgangsstellung in der ersten Füll-Position (I) zur zweiten Brüh-Position (II) um 30°, von der Brüh-Position (II) zur dritten Ausstoss-Position (III) um weitere 30° um die Achse (A--A) in eine Richtung verschwenkt wird und anschliessend um 60° in die Gegenrichtung in seine Ausgangsstellung zurückgedreht wird und dass in Achsrichtung (A--A) nebeneinander wenigstens zwei Brühkammern (25,26) vorgesehen sind, welche unterschiedliche Durchmesser und Volumina aufweisen.

2. Kaffeemaschine nach Anspruch 1, **dadurch gekennzeichnet, dass** der Brühblock (32) zwischen zwei seitlich angeordneten Flanschen (46,47) verschwenkbar gehalten ist und dass dieser Brühblock (32) eine partiell zylindrische Aussenform aufweist, welche im Bereich der Brühkammern (25,26) eine zu deren Wänden orthogonale, ebene Fläche (33) enthält.

3. Kaffeemaschine nach Anspruch 2, **dadurch gekennzeichnet, dass** die beiden Flansche (46,47) mit an diesen aussen kraftschlüssig verbundenen Stirnräder (60) angetrieben sind,

4. Kaffeemaschine nach Anspruch 3, **dadurch gekennzeichnet, dass** den Stirnrädern (60) Kurvenscheiben (62,63) zugeordnet sind, welche den Brühblock (32) mit seinen oberen Brühkolben (29,30) verfährt und wobei diese zudem einen Abstreifmechanismus (50) betätigen, welcher die Rückstände beim Ziegel-Ausstoss abstreift.

5. Kaffeemaschine nach einem der Ansprüche 1 bis 4, **dadurch gekennzeichnet, dass** die Betätigung der Kolben (29,30;36,37) und eines Abstreifers (50) für das Entfernen der Rückstände beim Ziegelausstoss elektrisch, elektromechanisch und/oder fluidmechanisch erfolgt.

6. Kaffeemaschine mit zwei Kaffeemühlen nach Anspruch 1, **dadurch gekennzeichnet, dass** oberhalb der Brühkammern (25,26) Mahlwerke (17) angeordnet sind, und dass deren Elektromotoren (18,19) miteinander einen Winkel (α) von 180° bis 30° bilden.

7. Kaffeemaschine nach Anspruch 6, **dadurch gekennzeichnet, dass** oberhalb und zwischen den Brühkammern (25,26) ein steuerbarer Schwenktrichter (22) für die Umlenkung der Kaffeepulverzufuhr vorgesehen ist.

8. Verfahren zum Betrieb einer Kaffeemaschine nach Anspruch 1, **dadurch gekennzeichnet, dass** nach dem Ausfliessen des Kaffees in der zweiten Brüh-Position (II) der Brühkolben nach oben bewegt wird bis er aus der Brühkammer ausgefahren ist, und dass anschliessend in der Ausstoss-Position (III) der Sieb-/ Ausstoss-Kolben bis ans obere Ende der Brühkammer verfuhrt und den Kaffeeziegel vollständig ausstösst, und dass der Sieb-/ Ausstoss-Kolben zumindest während eines Teils des Zurückdrehens in die erste Füll-Position (I) in seiner oberen Lage verharrt und dass dabei der Abstreifer auf der ebenen Fläche des Brühblocks aufliegt.

## Claims

1. A coffee machine comprising at least one cylindrical brewing chamber (26) and a device for preparing (2; 17) and apportioning (15, 16) coffee powder, which brewing chambers (26) are each closable by means of an upper (30) and a lower (37) axially displaceable plunger and into which hot water may be introduced under pressure, wherein the brewing chamber (25) is recessed in a brewing block (32) which, guided partially over a circular path (R) around a horizontally arranged axis (A--A), may be swivelled into a vertical first filling position (I), then into a second brewing position (II) with hot water feed and coffee discharge and into a third compacted coffee grounds-expelling position (III), and wherein this brewing block (32) indirectly or directly entrains one or more similar plungers (36, 37) which are operable axially, **characterized in that** the brewing block (32) is swivelled in one direction around the axis (A--A) from its starting position in the first filling position (I) through 30° to the second brewing position (II), from the brewing position (II) through another 30° to the third expelling position (III) and is then turned back through 60° in the opposite direction to its starting position, and **in that** at least two brewing chambers (25, 26) which have different diameters and volumes are provided side by side in the axial direction (A--A).

2. A coffee machine according to Claim 1, **characterized in that** the brewing block (32) is pivotally held between two laterally arranged flanges (46, 47) and **in that** this brewing block (32) has a partially cylindrical exterior shape which, in the region of the brewing chambers (25, 26), contains a flat surface (33) orthogonal to the walls thereof.

3. A coffee machine according to Claim 2, **characterized in that** the two flanges (46, 47) are actuated by means of spur gears (60) non-positively connected to the outside thereof.

4. A coffee machine according to Claim 3, **characterized in that** cam discs (62, 63) are associated with the spur gears (60), and move the brewing block (32) with its upper brewing plungers (29, 30) and wherein they additionally actuate a scraper mechanism (50) which scrapes off the residues when the compacted coffee grounds are expelled.

5. A coffee machine according to one of Claims 1 to 4, **characterized in that** the plungers (29, 30; 36, 37) and a scraper (50) for removing the residues when the compacted coffee grounds are expelled are operated electrically, electromechanically and/or fluid-mechanically.

6. A coffee machine comprising two coffee grinders according to Claim 1, **characterized in that** grinding mechanisms (17) are arranged above the brewing chambers (25, 26), and **in that** their electric motors (18, 19) enclose an angle (α) of 180° to 30° between them.

7. A coffee machine according to Claim 6, **characterized in that** a controllable swivelling funnel (22) is provided above and between the brewing chambers (25, 26) for diverting the coffee-powder supply.

8. A method for operating a coffee machine according to Claim 1, **characterized in that,** after the outflow of coffee in the second brewing position (II), the brewing plunger is moved upwards until it has travelled out of the brewing chamber, and **in that**, in the expelling position (III), the straining/expelling plunger then moves to the top end of the brewing chamber and expels the compacted coffee grounds completely, and **in that** the straining/expelling plunger remains in its upper position at least during part of the rotation back into the first filling position (I) and **in that**, during this, the scraper lies on the flat surface of the brewing block.

## Revendications

1. Machine à café comprenant au moins un compartiment d'échaudage (26) cylindrique et un dispositif de préparation (2 ; 17) et de répartition (15, 16) de café moulu, lequel compartiment d'échaudage (26) peut être fermé par un piston supérieur (30) et un piston inférieur (37), mobiles dans la direction axiale, et être alimenté par de l'eau chaude sous pression, le compartiment d'échaudage (25) étant reçu dans un bloc d'échaudage (32) qui, guidé partiellement sur une trajectoire circulaire (R) autour d'un axe (A--A) disposé horizontalement, peut pivoter dans une première position de remplissage verticale (I), puis dans une deuxième position d'échaudage (II) avec arrivée d'eau chaude et sortie de café, et dans une troisième position d'éjection des briques de café (III), ce bloc d'échaudage (32) entraînant directement ou indirectement un ou plusieurs pistons (30 ; 37) similaires, pouvant être actionnés dans la direction axiale, **caractérisée en ce que** le bloc d'échaudage (32) est tourné dans un sens autour de l'axe (A--A) de 30° de sa position initiale dans la première position de remplissage (I) à la deuxième position d'échaudage (II), de 30° encore de la position d'échaudage (II) à la troisième position d'éjection (III), et est ramené dans sa position initiale par un pivotement de 60° dans le sens inverse, et qu'au moins deux compartiments d'échaudage (25, 26), qui présentent des diamètres et volumes différents, sont juxtaposés dans la direction de l'axe (A--A).

2. Machine à café suivant la revendication 1, **caractérisée en ce que** le bloc d'échaudage (32) est maintenu pivotant entre deux brides (46, 47) disposées latéralement, et que ce bloc d'échaudage (32) présente une forme extérieure partiellement cylindrique, qui comporte dans la zone des compartiments d'échaudage (25, 26) une surface plane (33) orthogonale aux parois de ces derniers.

3. Machine à café suivant la revendication 2, **caractérisée en ce que** les deux brides (46, 47) sont entraînées par des roues cylindriques (60), reliées à celles-ci de l'extérieur par force d'adhérence.

4. Machine à café suivant la revendication 3, **caractérisée en ce que** des cames (62, 63), qui déplacent le bloc d'échaudage (32) avec ses pistons supérieurs (29, 30), sont associées aux roues cylindriques (60), ces cames actionnant en supplément un mécanisme de raclage (50), qui racle les résidus lors de l'éjection des briques.

5. Machine à café suivant l'une des revendications 1 à 4, **caractérisée en ce que** la commande des pistons (29, 30 ; 36, 37) et d'un racloir (50) pour l'élimination des résidus lors de l'éjection des briques est assurée par voie électrique, électromécanique et/ou de mécanique des fluides.

6. Machine à café munie de deux moulins à café suivant la revendication 1, **caractérisée en ce que** des mécanismes de broyage (17) sont disposés au-dessus des compartiments d'échaudage (25, 26), et que leurs moteurs électriques (18, 19) forment entre eux un angle (α) de 180° à 30°.

7. Machine à café suivant la revendication 6, **caractérisée en ce qu'**un entonnoir pivotant (22) commandé est prévu pour le renvoi de l'arrivée de café moulu, au-dessus et entre les compartiments d'échaudage (25, 26).

8. Procédé d'exploitation d'une machine à café suivant la revendication 1, **caractérisé en ce que**, après l'écoulement du café dans la deuxième position d'échaudage (II), le piston d'échaudage est déplacé vers le haut jusqu'à ce qu'il soit sorti du compartiment d'échaudage, que dans la position d'éjection (III) le piston de filtrage/éjection est ensuite déplacé jusqu'à l'extrémité supérieure du compartiment d'échaudage et éjecte totalement la brique de café, et que le piston de filtrage/éjection, au moins pendant une partie de sa rotation en retour dans la première position de remplissage (I), reste dans sa position supérieure, et que le racloir s'applique alors sur la surface plane du bloc d'échaudage.
